# EUROPEAN PATENT APPLICATION

(11) **EP 2 065 119 A1**
(43) Date of publication of application: **03.06.2009**
(21) Application number: 07807077.8
(22) Date of filing: 11.09.2007
(51) Int. Cl.: B23K 26/38, B23K 26/073, B23K 26/40, G02B 5/30

(54) **OPTICAL FILM CUTTING METHOD, AND OPTICAL FILM**

(30) Priority: 22.09.2006 JP 2006257459
(71) Applicant: Nitto Denko Corporation, Ibaraki-shi, Osaka 567-8680 (JP)
(72) Inventor: NISHIDA, Kanji, Ibaraki-shi, Osaka 567-8680 (JP); HINO, Atsushi, Ibaraki-shi, Osaka 567-8680 (JP); AMANO, Takaichi, Ibaraki-shi, Osaka 567-8680 (JP); KITADA, Kazuo, Ibaraki-shi, Osaka 567-8680 (JP)
(74) Representative: Grünecker, Kinkeldey, Stockmair & Schwanhäusser Anwaltssozietät
(86) International application number: PCT/JP2007/067668
(87) International publication number: WO 2008/035591

(57) **Abstract**

This invention relates to an optical film cutting method, which includes: a laser beam generation step of performing a waveform shaping of a laser beam to generate a laser beam having a rectangular waveform, and a cutting step of irradiating an optical film with the laser beam obtained by the laser beam generation step and having a rectangular waveform to thereby cut the optical film; as well as to an optical film that is cut by the cutting method and having a size of a raised part generated on a cutting surface thereof of 30 µm or less. According to the optical film cutting method of this invention, it is possible to provide an optical film cutting method for cutting an optical film such as a polarizing film by not using a gaussian beam but using a laser beam of which a waveform is shaped into a rectangular waveform, which is capable of maintaining a raised part size as small as possible in a cutting surface of the optical film and preventing generation of bonding defect and optical defect when the optical film is incorporated into various optical panels.

## Description

### TECHNICAL FIELD

This invention relates to an optical film cutting method using a laser beam and an optical film to be obtained by the cutting method, and particularly, it relates to an optical film cutting method for cutting an optical film such as a polarizing film by using a laser beam of which a waveform is shaped into a rectangular waveform and to an optical film that is cut by the cutting method.

### BACKGROUND ART

For cutting various optical films such as a polarizing film, there are a mechanical cutting method of cutting with the use of a die or a cutting blade and a laser cutting method of irradiating an optical film with a laser beam.

In the mechanical cutting method, fine cutting swarf is generated from a cutting surface during cutting the optical film and, in some cases, the cutting swarf undesirably enters the inside of a liquid crystal panel when mounting the optical film to the liquid crystal panel. When the cutting swarf enters the inside of the liquid crystal panel, a display defect of the liquid crystal panel occurs, thereby resulting in a problem of a reduction in production yield of the liquid crystal panels.

In contrast, in the case of the laser cutting method, since such cutting swarf is hardly generated during cutting the optical film, the production yield of liquid crystal panels and the like is not so much reduced as compared to the above-described mechanical cutting method, and the laser cutting method is considered to be superior to the mechanical cutting method.

For example, JP-A-2005-189530 discloses a method of producing a laminate type polarizing plate in which a laminated body is formed by laminating a polarizing plate and a resin film having an optical transmittance of 80% or more and a glass transition temperature of 100°C or more and then cutting the laminated body by irradiating a resin film side of the laminated body with a laser.

According to the above-mentioned production method of a laminate type polarizing plate, it is possible to prevent generation of projections and protrusions on a cutting surface of the polarizing plate by irradiating the resin film side in the laminated body of the polarizing plate and the resin film.
Patent Publication 1: JP-A-2005-189530

### DISCLOSURE OF THE INVENTION

However, the laser used in the above-mentioned production method of a laminate type polarizing plate is generally a gaussian beam (beam of which beam intensity is of gaussian distribution). Due to the gaussian distribution of the beam intensity, the gaussian beam has characteristics that beam intensity at a central part of a beam spot is large, but the beam intensity is gradually reduced as approaching to the outside of the central part.

Therefore, when an optical film is cut by using such gaussian beam, the optical film is firstly cut due to decomposition and evaporation of an optical film component caused at the central part of the beam spot, but, since the beam intensity is reduced as approaching to the outside of the central part of the beam spot, the optical film component is gradually molten and decomposed.

In this case, a stress directed to the outside occurs when the optical film component is decomposed and evaporated at the central part of the beam spot so that, at the outside of the central part of the beam spot, the molten optical film component is pressed outward without being decomposed nor evaporated due to the stress. As a result, a projection (raised part) of the molten component is generated at a cutting surface of the optical film.

When the raised part is generated on the optical film cutting surface as described above, there are problems that a bonding defect at an edge of a liquid crystal panel or various optical defects may occur when incorporating the optical film into the liquid crystal panel or the like.

This invention has been accomplished for solving the above-described conventional problems, and an object thereof is to provide an optical film cutting method for cutting an optical film such as a polarizing film by not using a gaussian beam but using a laser beam of which a waveform is shaped into a rectangular waveform, which is capable of maintaining a raised part size as small as possible in a cutting surface of the optical film and preventing generation of bonding defect and optical defect when the optical film is incorporated into various optical panels, as well as an optical film that is cut by the cutting method.

More specifically, this invention relates to the following (1) to (9).
(1) An optical film cutting method comprising:
   a laser beam generation step of performing a waveform shaping of a laser beam to generate a laser beam having a rectangular waveform, and
   a cutting step of irradiating an optical film with the laser beam obtained by the laser beam generation step and having a rectangular waveform to thereby cut the optical film.
(2) The optical film cutting method according to (1) above, wherein the waveform shaping is performed in such a manner that the laser beam has a rising angle representing a beam intensity distribution from a beam edge in the rectangular waveform of 60° or more.
(3) The optical film cutting method according to (1) or (2) above, wherein the waveform shaping is performed in such a manner that the laser beam has a beam intensity distribution σ of 0.13 or less when the intensity at a laser beam center is 1, within a half bandwidth of the rectangular waveform.
(4) The optical film cutting method according to (2) or (3) above, wherein a size of a raised part generated on a film cutting surface when cutting the optical film with the laser beam is 30 µm or less.
(5) The optical film cutting method according to (1) above, wherein the laser is a CO₂ laser.
(6) An optical film cut by the cutting method according to (1) above and having a size of a raised part generated on a cutting surface thereof of 30 µm or less.
(7) The optical film according to (6) above, wherein the waveform shaping is performed in such a manner that the laser beam has a rising angle representing a beam intensity distribution from a beam edge in the rectangular waveform of 60° or more.
(8) The optical film according to (6) or (7), wherein the waveform shaping is performed in such a manner that the laser beam has a beam intensity distribution σ of 0.13 or less when the intensity at a laser beam center is 1, within a half bandwidth of the rectangular waveform.
(9) The optical film according to (6) above, wherein the laser is a CO₂ laser.

According to the optical film cutting method of (1) above, since a laser beam having a rectangular waveform is generated by performing a waveform shaping of the laser beam and the optical film is cut by irradiation with the laser beam having a rectangular waveform, it is possible to maintain the raised part size on the optical film cutting surface as small as possible, thereby enabling prevention of bonding defect and optical defect when the optical film is incorporated into various optical panels.

Herein, it is desirable that the waveform shaping is performed in such a manner that the laser beam has a rising angle representing a beam intensity distribution from a beam edge in the rectangular waveform of 60° or more, and it is also desirable that the waveform shaping is performed in such a manner that the laser beam has a beam intensity distribution σ of 0.13 or less when the intensity at a laser beam center is 1, within a half bandwidth of the rectangular waveform.

According to the cutting method using the above-mentioned laser beam, it is possible to obtain an optical film in which a size of a raised part generated on a cutting surface thereof is 30 µm or less.

### BRIEF DESCRIPTION OF THE DRAWINGS

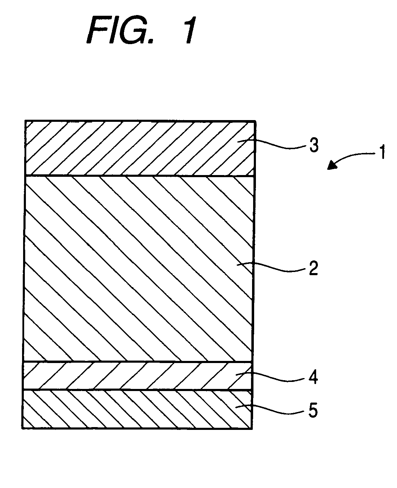

Fig. 1 shows a diagram schematically showing a structure of an optical film.

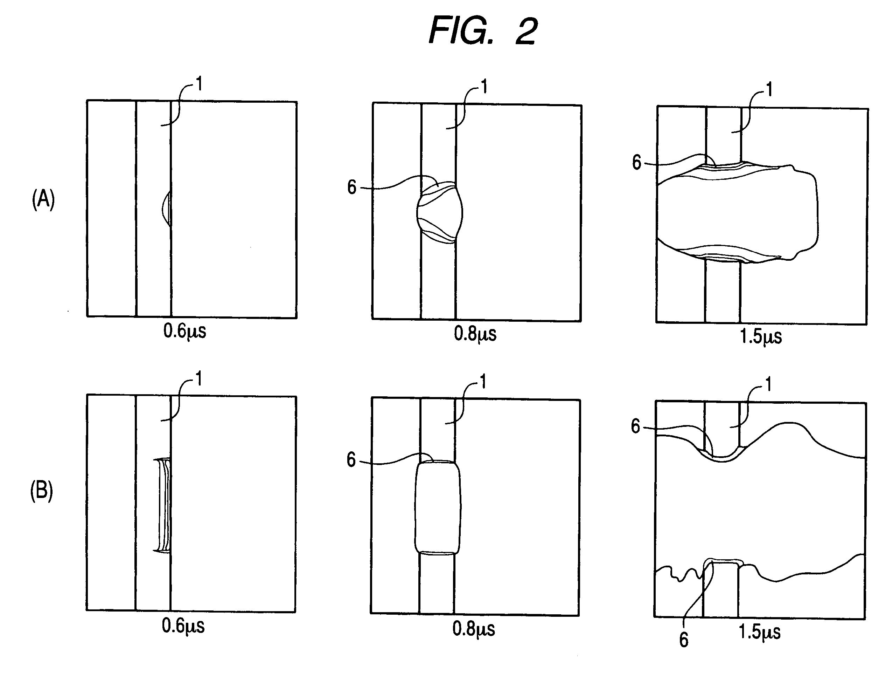

Fig. 2 shows diagrams schematically showing changes in cutting state of optical films along with a laser beam irradiation time when cutting the optical films by a laser beam, in which Fig. 2(A) is a diagram schematically showing a change in cutting state of an optical film along with a laser beam irradiation time when cutting the optical film by using a gaussian laser beam, and Fig. 2(B) is a diagram schematically showing a change in cutting state of another optical film along with a laser beam irradiation time when cutting the optical film by using a laser beam obtained by shaping the gaussian laser beam into a rectangular waveform.

### Description of Reference Numerals

- 1:: optical film
- 2:: polarizing plate
- 3:: surface protection film
- 4:: adhesive layer
- 5:: separator
- 6:: film molten layer

### BEST MODE FOR CARRYING OUT THE INVENTION

Hereinafter, an optical film cutting method according to this invention will be described in detail based on embodiments and with reference to the drawings.

Initially, a structure of an optical film according to this embodiment will be described based on Fig. 1. Fig. 1 is a diagram schematically showing the structure of the optical film.

In Fig. 1, an optical film 1 is basically formed of a polarizing plate 2, a surface protection film 3 bonded to an upper surface of the polarizing plate 2, a separator 5 bonded to a lower surface of the polarizing plate 2 via an adhesive layer 4.

It is possible to use known polarizing plates as the polarizing plate 2, and examples of the polarizing plates include those obtained by forming a transparent protection layer on one surface or each of both surfaces of a polarizing film. The polarizing film is not particularly limited, and it is possible to use known polarizing films. More specifically, it is possible to use polarizing films prepared by dyeing various films by causing the films to absorb a dichromatic substance such as iodine and a dichromatic dye, followed by crosslinking, drawing, and drying, for example. Among the above, those allowing a linear polarized light to pass therethrough when a natural light is made incident thereto are preferred, and those having excellent optical transmittance and polarizing degree are preferred. Examples of the various films that are caused to absorb the dichromatic substance include a hydrophilic polymer film such as a PVA film, a partially formalized PVA film, an ethylene-vinyl acetate copolymer-based partially saponified film, and a cellulose film, and other films such as a polyene oriented film such as a dehydrochlorination treatment product of PVA and a dehydrochlorination treatment product of polyvinyl chloride may also be used. Among the above, the PVA film is preferred. A thickness of the polarizing film ordinarily is about 200 µm without limitation thereto.

As the transparent protection layer, known transparent films are usable without particular limitation thereto, and those excellent in transparency, mechanical strength, heat stability, moisture shielding property, isotropy, and so on are preferred. Specific examples of a material for the transparent layer include a polyester-based polymer such as polyethylene terephthalate and polyethylene naphthalate; a cellulose-based polymer such as diacetyl cellulose and triacetyl cellulose; an acrylic polymer such as polymethyl (meth)acrylate; a styrene-based polymer such as polystyrene and an acrylonitrile-styrene copolymer (AS resin); and a polycarbonate-based polymer. Also, the examples include a polyolefin-based polymer such as polyethylene, polypropylene, cyclo-based or norbomene-structure-containing polyolefin, and ethylene-propylene copolymer, a vinyl chloride polymer, a nylon- or aromatic polyamide-based polymer, an imide-based polymer, a sulfone-based polymer, a polyether sulfone-based polymer, a polyether ether ketone-based polymer, a vinylidene chloride-based polymer, a vinyl alcohol-based polymer, a vinyl butyral-based polymer, an allylate-based polymer, a polyoxymethylene-based polymer, an epoxy-based polymer, and a mixed polymer thereof. Among the above, the cellulose-based polymer is preferred. A thickness of the transparent protection film is not particularly limited.

Bonding between the polarizing film and the transparent protection layer is not particularly limited, and, for example, an isocyanate-based adhesive, a polyvinyl alcohol-based adhesive, a gelatin-based adhesive, a vinyl-based latex, a water-based proester, and the like may be used.

Various treatments such as a hard coat treatment, antireflection treatment, antisticking treatment, a diffusion treatment, an antiglare treatment, an antiglare with antireflection treatment, an antistatic treatment, a contamination control treatment, and the like may be performed on a surface of the polarizing plate 2 in accordance with the intended use.

The hard coat treatment has an aim of preventing scratching and the like on the polarizing plate surface and can be performed, for example, by a method of forming on a surface of a film a hard film excellent in hardness and slip characteristics by using an acryl-based or silicon-based UV curable resin and the like. The antireflection treatment has an aim of preventing reflection of an external light on a surface of the optical film and can be performed by way of formation of a known antireflection film (physical optics film or coated thin film) and the like.

The antiglare treatment has an aim of preventing an external light from being reflected on an optical film surface to inhibit visibility of a light passed through the polarizing plate and the like. For example, film roughening by a sand blast method, an emboss processing method, and the like or a film formation method of blending transparent particles to a film forming material and the like may be performed for providing a fine unevenness structure on the film surface. As the fine particles to be contained for forming the surface fine unevenness, those having an average particle diameter of 0.5 to 50 µm, for example, and formed from an organic material such as silica, alumina, titania, zirconia, tin oxide, indium oxide, cadmium oxide, and antimony oxide and the like may be used. In the case of forming the surface fine unevenness structure, a use amount of the fine particles may ordinarily be about 2 to 50 parts by weight, preferably 5 to 25 parts by weight with respect to 100 parts by weight of a resin. The antiglare layer may be used also as a diffusion layer for enlarging an eyesight (eyesight enlargement function) or the like by diffusing a polarizing plate-transmitted light.

A method for laminating the polarizing film and the transparent protection layer is not particularly limited, and it is possible to perform a known method by using, for example, an isocyanate-based adhesive, a polyvinyl alcohol-based adhesive, a gelatin-based adhesive, a vinyl latex-based adhesive, and a water-based polyester adhesive, or the like. The type of the adhesive may appropriately be decided depending on materials of the polarizer and the protection layer and the like.

As the surface protection layer 3, those excellent in transparency, impact resistance, and heat resistance as described above are preferred, and examples thereof include an epoxy resin, a polyester resin, a methacrylic resin, a polycarbonate (PC) resin, a polyethylene naphthalate (PEN) resin, a polyethylene terephthalate (PET) resin, triacetyl cellulose (TAC), a polynorbornene resin such as ARTON (trade name) manufactured by JSR Corporation, a polyimide resin, a polyether imide resin, a polyamide resin, a polysulfone resin, a polyphenylene sulfide resin, and a polyether sulfone resin, among which the epoxy resin is preferred. These may be used alone or in combination of two or more. A thickness of the surface protection film 3 may preferably be about 60 µm.

The epoxy resin may preferably have an epoxy equivalent of 100 to 1000 and a softening point of 120°C or less from the view points of physical properties such as flexibility and strength of a resin sheet to be obtained. Further, it is preferable to use an epoxy resin of a two component type that is in a liquid state at a temperature equal to or lower than a temperature at which coating is performed, particularly at an ordinary temperature, for example, in view of obtainment of an epoxy resin-containing liquid excellent in coating property, expansion to a sheet form and the like.

Examples of the epoxy resin include a bisphenol type such as a bisphenol A type, a bisphenol F type, a bisphenol S type, and those obtained by adding water thereto; a novolac type such as a phenol novolac type and a cresol novolac type; a nitrogen ring-containing type such as a triglycidyl isocyanurate type and hydantoin type; an alicyclic type; an aliphatic type; an aromatic type such as naphthalene type; a low water absorption type such as a glycidylether type and a biphenyl type; a dicyclo type; an ester type; an etherester type; and modified types thereof. Among the above, from the view points of decoloration prevention and the like, the bisphenol A type epoxy resin, the alicyclic epoxy resin, the triglycidyl isocyanurate type are preferred, and the alicyclic epoxy resin is particularly preferred. These may be used alone or in combination of two or more.

Since the epoxy resin is excellent in optical isotropy, a phase difference thereof may preferably be 5 nm or less, more preferably 1 nm.

As the separator 5 to be bonded via the adhesive layer 4 on the lower surface of the polarizing plate 2, for example, a sheet containing a resin which is excellent in mechanical strength and heat resistance is preferred, and examples thereof include a polyester-based polymer such as polyethylene terephthalate and polyethylene naphthalate; a cellulose-based polymer such as diacetyl cellulose and triacetyl cellulose; an acrylic polymer such as polymethyl (meth)acrylate; a styrene-based polymer such as polystyrene and an acrylonitrile-styrene copolymer (AS resin); and a polycarbonate-based polymer. Also, the examples include a polyolefin-based polymer such as polyethylene, polypropylene, cyclo-based or norbornene-structure-containing polyolefin, and ethylene-propylene copolymer, a vinyl chloride polymer, a nylon- or aromatic polyamide-based polymer, an imide-based polymer, a sulfone-based polymer, a polyether sulfone-based polymer, a polyether ether ketone-based polymer, a vinylidene chloride-based polymer, a vinyl alcohol-based polymer, a vinyl butyral-based polymer, an allylate-based polymer, a polyoxymethylene-based polymer, an epoxy-based polymer, and a mixed polymer thereof. Among the above, the polyester-based polymer such as polyethylene terephthalate and polyethylene naphthalate is preferred. A thickness of the separator 5 may preferably be about 38 µm.

The adhesive forming the adhesive layer 4 is not particularly limited, and examples thereof include a polymer-based adhesive such as acrylic, vinyl alcohol-based, silicone-based, polyester-based, polyurethane-based, and polyether-based ones; and a rubber-based adhesive. Also, an adhesive formed of a water-soluble crosslinking agent of a vinyl alcohol-based polymer such as gultaraldehyde, melamine, and oxalic acid and the like is usable. The above-mentioned adhesives are hardly peeled off even under the influence of moisture and heat and is excellent in optical transmittance and polarizing degree. Among the above, from the view points of transparency and durability, the acrylic adhesive may most preferably be used. The adhesive is not limited by the type such as a thermal crosslinking type and a photo-crosslinking (UV ray or electron beam) type.

The acrylic adhesive contains an acrylic polymer having transparency and the above-described dynamic storage elastic modulus as a main agent, and an additive may appropriately be added to the acrylic adhesive, or the acrylic adhesive may be made into a composite by using an inorganic filler. The acrylic polymer contains (meth)acrylate alkyl ester as a main component and is obtainable by adding a reforming monomer having a polar group such as an OH group, a COOH group, an amino group, an amide group, a sulfonic acid group, and a phosphoric acid group and capable of copolymerization with the main component for the purpose of improving contact with the protection film of the polarizing plate via a base coat layer, followed by a polymerization treatment of the components by an ordinary method. For the purpose of adjustment of heat resistance, a crosslinking treatment is performed when so required.

Hereinafter, the laser beam to be used in this embodiment will be described. Examples of a laser include a CO₂ laser, a YAG laser, and a UV laser and, among all, the CO₂ laser is preferred from the view points of great applicability to a wide thickness range and being free from breakage and crack. In the laser irradiation, an output and a speed are not limited, and the cutting may be performed by one irradiation or by a plurality of irradiations. The output of the laser irradiation is, for example, 10 to 800 W, in which the output for cutting by one irradiation may preferably be 100 to 350 W, and the output for cutting by two irradiations may preferably be 50 to 200 W.

Each of the laser beams generated by the various lasers basically is a gaussian beam having a maximum value of beam strength at the central part of a laser spot and, since the beam strength is in the form of a gaussian distribution, the beam strength has characteristics of being large at the central part of the beam spot and gradually reduced as approaching to the outside of the central part.

Therefore, as described in the column of background art, when the gaussian beam is used for cutting the optical film 1, although the cutting starts due to decomposition and evaporation of an optical film component caused at the central part of the beam spot, since the beam intensity is reduced as approaching to the outside of the central part of the beam spot, the optical film component is gradually molten and decomposed.

In this case, a stress directed to the outside occurs when the optical film component is decomposed and evaporated at the central part of the beam spot, so that the molten optical film component is pressed to the outside without being decomposed nor evaporated at the outside of the central part of the beam spot due to the stress. As a result, since a raised part of the molten component is generated at a cutting surface of the optical film, a bonding defect at an edge of a liquid crystal panel or various optical defects may occur when incorporating the optical film into the liquid crystal panel.

Accordingly, in this embodiment, the waveform of the above-described gaussian beam is shaped into a rectangular waveform. It is possible to perform such a waveform shaping, for example, by providing the laser generation apparatus with a diffraction optical element. Also, by controlling the diffraction optical element, it is possible to arbitrarily set a rising angle which represents a beam intensity distribution from a beam edge in the rectangular waveform of the laser beam.

In this invention, the laser beam may preferably be subjected to a waveform shaping in such a manner that the rising angle representing the beam intensity distribution from the beam edge in the rectangular waveform is 60° or more.

Also, as a state of the rectangular waveform in the laser beam underwent the waveform shaping, the beam intensity distribution when the intensity at the laser beam center is 1 is represented by a σ value within a half bandwidth of the rectangular waveform. The rectangular waveform becomes sharper along with a reduction in σ value and becomes vague along with an increase in σ value to approximate the gaussian beam.

In this invention, it is desirable that the waveform shaping is so performed as to achieve a beam intensity distribution σ of 0.13 or less when the intensity of the beam center is 1, within the half bandwidth of the rectangular waveform.

Subsequently, with regard to both of the case of cutting an optical film using a gaussian beam as well as the case of cutting another optical film by using a laser beam obtained by shaping the gaussian beam into a rectangular waveform, changes in cutting state of the optical films along with irradiation time of the laser beam are simulated under the following simulation conditions.

### Simulation Conditions

The simulation conditions are as follows. A case of cutting a PET film as the optical film is assumed, and the simulations are performed in accordance with the finite element method.
1. Mesh size
   1 µm × 1 µm (thickness of the PET film: 38 µm)
   Unequally spaced grid from a laser irradiation part (coefficient: 1.1)
2. Laser
   Wavelength: 10.6 µm
   Type of oscillation: pulse oscillation
   Spot size: 100 µmφ (1/e by gaussian distribution)
   Cyclic frequency: 5 kHz
   Pulse width: 2 ms (1/e by gaussian distribution)
3. Material to be cut (PET film)
   Thickness: 38 µm
   Specific weight: 1.4 g/cc
   Molecular weight: 8.73
   Decomposition temperature: 679 K
   Melting point: 533 K
   Heat conductivity: 0.18 J/m/s/K
   Young's modulus: 4000 Mpa
   Yield stress: 215 Mpa
   Light absorption: 26.0%

Results of the simulations are shown in Fig. 2. Shown in Fig. 2 are diagrams schematically showing changes in cutting state of PET films along with a laser beam irradiation time when cutting PET films by a laser beam, in which Fig. 2(A) is a diagram schematically showing a change in cutting state of a PET film along with a laser beam irradiation time when cutting the PET film by using a gaussian laser beam, and Fig. 2(B) is a diagram schematically showing a change in cutting state of another PET film along with a laser beam irradiation time when cutting the PET film by using a laser beam obtained by shaping the gaussian laser beam into a rectangular waveform.

In Figs. 2(A) and 2(B), the laser beam is irradiated from the left side of the PET film.

In Fig. 2(A), in the state where the PET film 1 is irradiated with the gaussian beam for 0.6 µsec, since the beam intensity is in the form of the gaussian beam distribution from the central part toward the outside of the beam due to the gaussian beam, melting of the film component in the form of a circular arc is started at the beam irradiation part in the optical film 1.

Further, when the laser beam irradiation time is 0.8 µsec, melting and decomposition of the film component rapidly occur. In this case, a cutting surface of the PET film 1 is in a tapered form because the beam intensity is in the form of the gaussian beam distribution from the central part toward the outside of the beam due to the gaussian beam, and a space between both of the tapered cutting surfaces is filled with an evaporated component accompanying the decomposition of film component.

A thick film melting layer 6 remains on an inner surface of each of the tapered cutting surfaces.

At the time point when 1.5 µsec of the laser irradiation time has passed, the tapered parts at the cutting surfaces of the PET film 1 are molten and decomposed, so that the PET film 1 is completely cut. In this state, although the cutting surfaces are substantially parallel to the laser beam irradiation direction, the thick film melting layer 6 remains from a laser beam incident side, a cutting edge surface, and a laser beam exit side of each of the cutting surfaces, and the film melting layer 6 is considered to form a raised part (projection part) on each of the cutting surfaces due to cooling with time of the PET film 1.

In contrast, as shown in Fig. 2(B), in a state where the PET film 1 is irradiated with a rectangular laser beam for 0.6 µsec, since the beam intensity is substantially uniformly distributed from a central part to the outside of the beam based on the waveform of the beam (rectangular waveform), melting of the film component is started uniformly at the beam irradiation part in the PET film 1.

Further, when the laser beam irradiation time is 0.8 µsec, melting and decomposition of the film component rapidly occur. In this case, a cutting surface of the PET film 1 is formed to be parallel to the irradiation direction of the laser beam because the beam intensity is substantially uniformly distributed from a central part to the outside of the beam. A space between both of the cutting surfaces is filled with an evaporated component accompanying the decomposition of film component.

A remarkably thin film melting layer 6 remains on an inner surface of each of the tapered cutting surfaces.

At the time point when 1.5 µsec of the laser irradiation time has passed, the PET film 1 is completely cut through both of the cutting surface parallel to the irradiation direction of the laser beam. In this state, the cutting surfaces are parallel to the laser beam irradiation direction, and the film melting layer 6 remaining on each of the inner surfaces of the cutting surfaces is remarkably thin. Therefore, a raised part (projection part) due to the film melting layer 6 is hardly formed even when the PET film 1 is cooled with time.

In the foregoing, the results of the simulations of the case of using a PET film as the optical film and cutting the PET film by irradiation with the rectangular wave laser beam have been described, but it is considered that similar simulation results will be obtained not only in the case of the PET film but also the case of various other films.

Hereinafter, this invention will be described in more details by using examples and comparative example, but this invention is not limited to the following examples. The size of a raised part generated on a cutting surface of an optical film after cutting was measured by using a laser microscope or an optical microscope.

### EXAMPLE 1

### (Production of Polarizing Plate)

A polarizer was produced by drawing a polyvinyl alcohol film (thickness: 80 µm) by 5 times in an iodine aqueous solution, followed by drying. Subsequently, a UV urethane hard coat layer having a reflectance of 1 % or less and a physical optics thin film (AR layer) were formed in this order on one surface of a triacetyl cellulose film (TAC film). The treated TAC film was laminated on one surface of the polarizer and a non-treated TAC film was laminated on the other surface of the polarizer via an adhesive, respectively, to obtain a polarizing plate (thickness: 200 µm, optical transmittance: 45%).

### (Production of Surface Protection Film)

To 100 parts by weight of 3,4-epoxycyclohexylmethyl-3,4-epoxycyclohexanecarboxylate, 120 parts by weight of methyltetrahydrophthalic anhydride as a curing agent and 2 parts by weight of tetra-n-butylphosphonium O,O-diethylphosphorodithioate as a curing accelerator were added and mixed with stirring, followed by forming a pre-film (thickness: 600 µm) by employing a casting method. The pre-film was heat-cured at 180°C for 30 minutes to produce an epoxy film (thickness: 700 µm, 380 mm × 280 mm). Subsequently, an acryl urethane UV resin was coated on one surface of the above-mentioned epoxy film to form a protection layer (thickness: 3 µm), thereby obtaining a resin film. The resin film had an optical transmittance of 91.7% and a glass transition temperature of 180°C.

### (Production of Adhesive)

100 parts by weight of butyl acrylate, 5.0 parts by weight of acrylic acid, 0.075 part by weight of 2-hydroxyethyl acrylate, 0.3 part by weight of azobisisonitrile, and 250 parts by weight of ethyl acetate were mixed, and the mixture was subjected to a reaction at about 60°C for 6 hours with stirring to obtain an acrylic polymer solution having a weight average molecular weight of 1,630,000. To the acrylic polymer, 0.6 part by weight of an isocyanate-based polyfunctional compound (trade name: Colonate L; manufactured by Nippon Polyurethane Industry Co., Ltd.) and 0.08 part by weight of a silane coupling agent (trade name: KBM403, manufactured by Shin-Etsu Chemical Co., Ltd.) were added with respect to 100 parts by weight of a polymer solid component of the acrylic polymer to prepare an adhesive solution. The thus-obtained adhesive solution had a 90° peeling strength of 10 N/25 mm.

### (Production of Separator)

The above-mentioned adhesive was coated on a PET film (thickness: 50 µm) by a thickness of 10 µm, followed by drying to obtain a surface protection sheet.

### (Production of Optical Film)

The non-treated TAC film side of the polarizing plate was attached to the epoxy film side of the surface protection film via the adhesive (thickness 23 µm). The separator was attached to a surface of the laminated body by using the adhesive.

### (Cutting Method)

By using a high precision processing CO₂ laser (trade name: SILAS-SAM (SPL2305); manufactured by Shibuya Kogyo Co., Ltd.; wavelength: 10.6 µm), the optical film was cut under the conditions of a beam spot diameter of 100 µm, an output of 190 W, a feeding speed of 250 mm/s, and an air assist gas pressure of 0.1 MPa by irradiating the optical film with a laser from the surface protection film side.

In this case, in Example 1, a laser beam having a rectangular waveform was generated by performing waveform shaping of the laser beam by using a diffraction optical element. The laser beam was subjected to the waveform shaping so as to achieve a rising angle of 60° representing a beam intensity distribution from a beam edge in the rectangular waveform as well as to achieve a beam intensity distribution σ of 0.130 within a half bandwidth of the rectangular waveform when intensity of the laser beam center is 1 as shown in Table 1.

A result of measurement of a raised part generated on a film cutting surface in the case of cutting the optical film in accordance with Example 1 is shown in Table 2.

### EXAMPLE 2

In Example 2, the laser beam used for cutting an optical film and having a rectangular waveform was subjected to waveform shaping so as to achieve a rising angle of 75° representing a beam intensity distribution from a beam edge in the rectangular waveform as well as to achieve a beam intensity distribution σ of 0.100 in a half bandwidth of the rectangular waveform when intensity of the laser beam center is 1 as shown in Table 1. Other parameters of the conditions were the same as those of Example 1.

A result of measurement of a raised part generated on a film cutting surface in the case of cutting the optical film in accordance with Example 2 is shown in Table 2.

### EXAMPLE 3

In Example 3, the laser beam used for cutting an optical film and having a rectangular waveform was subjected to waveform shaping so as to achieve a rising angle of 90° representing a beam intensity distribution from a beam edge in the rectangular waveform as well as to achieve a beam intensity distribution σ of 0.040 in a half bandwidth of the rectangular waveform when intensity of the laser beam center is 1 as shown in Table 1. Other parameters of the conditions were the same as those of Example 1.

A result of measurement of a raised part generated on a film cutting surface in the case of cutting the optical film in accordance with Example 3 is shown in Table 2.

### Comparative Example

In Comparative Example, the laser beam used for cutting an optical film and having a rectangular waveform was subjected to waveform shaping so as to achieve a rising angle of 45° representing a beam intensity distribution from a beam edge in the rectangular waveform as well as to achieve a beam intensity distribution σ of 0.300 in a half bandwidth of the rectangular waveform when intensity of the laser beam center is 1 as shown in Table 1. Other parameters of the conditions were the same as those of Example 1.

A result of measurement of a raised part generated on a film cutting surface in the case of cutting the optical film in accordance with Comparative Example is shown in Table 2.

As described above, shown in Table 1 are relationships between the rising angle representing the beam intensity distribution from the beam edge in the rectangular waveform and the beam intensity distribution σ in the half bandwidth of the rectangular waveform when intensity of the laser beam center is 1 of Example 1 to Example 3 and Comparative Example.

**Table 1**

| | Angle from Edge (Degree) | Intensity Distribution σ (-) |
|---|---|---|
| Example 1 | 60 | 0.130 |
| Example 2 | 75 | 0.100 |
| Example 3 | 90 | 0.040 |
| Comparative Example | 45 | 0.300 |

Also, shown in Table 2 are sizes of the raised parts measured in Example 1 to Example 3 and Comparative Example.

**Table 2**

| | Raised Part (µm) |
|---|---|
| Example 1 | 29 |
| Example 2 | 18 |
| Example 3 | 12 |
| Comparative Example | 45 |

As shown in Table 2, the size of the raised part generated on the cutting surface of the optical film that was cut according to Example 1 was 29 µm; the size of the raised part generated on the cutting surface of the optical film that was cut according to Example 2 was 18 µm; and the size of the raised part generated on the cutting surface of the optical film that was cut according to Example 3 was 12 µm. From the results, it is possible to suppress the size of the raised part to 30 µm or less in accordance with each of Examples.

It is apparent that the size of the raised part is reduced along with approximation of the waveform to the rectangular shape due to the increase in rising angle representing the beam intensity distribution from the beam edge in the rectangular waveform of the laser beam from 60° to 90° and along with a reduction in the beam intensity distribution σ from 0.130 to 0.040 when the intensity of laser beam center is 1 within the half bandwidth of the rectangular waveform.

In contrast, in Comparative Example, since the rising angle representing the beam intensity distribution from the beam edge in the rectangular waveform of the laser beam is as small as 45° to approximate the gaussian beam, and since the beam intensity distribution σ when the intensity of the laser beam center was 1 within the half bandwidth of the rectangular waveform was increased to 0.300, the size of the raised part generated on the cutting surface of the optical film that was cut in accordance with Comparative Example was increased to as large as 45 µm.

While the present invention has been described in detail and with reference to specific embodiments thereof, it will be apparent to one skilled in the art that various changes and modifications can be made therein without departing from the scope thereof.

This application is based on Japanese patent application No. 2006-257459 filed September 22, 2006, the entire contents thereof being hereby incorporated by reference.

Further, all references cited herein are incorporated in their entireties.

### INDUSTRIAL APPLICABILITY

According to the optical film cutting method of this invention, it is possible to provide an optical film cutting method for cutting an optical film such as a polarizing film by not using a gaussian beam but using a laser beam of which a waveform is shaped into a rectangular waveform, which is capable of maintaining a raised part size as small as possible in a cutting surface of the optical film and preventing generation of bonding defect and optical defect when the optical film is incorporated into various optical panels, as well as an optical film that is cut by the cutting method.

## Claims

1. An optical film cutting method comprising:
a laser beam generation step of performing a waveform shaping of a laser beam to generate a laser beam having a rectangular waveform, and
a cutting step of irradiating an optical film with the laser beam obtained by the laser beam generation step and having a rectangular waveform to thereby cut the optical film.

2. The optical film cutting method according to claim 1, wherein the waveform shaping is performed in such a manner that the laser beam has a rising angle representing a beam intensity distribution from a beam edge in the rectangular waveform of 60° or more.

3. The optical film cutting method according to claim 1 or 2, wherein the waveform shaping is performed in such a manner that the laser beam has a beam intensity distribution σ of 0.13 or less when the intensity at a laser beam center is 1, within a half bandwidth of the rectangular waveform .

4. The optical film cutting method according to claim 2 or 3, wherein a size of a raised part generated on a film cutting surface when cutting the optical film with the laser beam is 30 µm or less.

5. The optical film cutting method according to claim 1, wherein the laser is a CO₂ laser.

6. An optical film cut by the cutting method according to claim 1 and having a size of a raised part generated on a cutting surface thereof of 30 µm or less.

7. The optical film according to claim 6, wherein the waveform shaping is performed in such a manner that the laser beam has a rising angle representing a beam intensity distribution from a beam edge in the rectangular waveform of 60° or more.

8. The optical film according to claim 6 or 7, wherein the waveform shaping is performed in such a manner that the laser beam has a beam intensity distribution σ of 0.13 or less when the intensity at a laser beam center is 1, within a half bandwidth of the rectangular waveform.

9. The optical film according to claim 6, wherein the laser is a CO₂ laser.
